# EUROPÄISCHE PATENTANMELDUNG

(11) **EP 2 561 975 A1**
(43) Veröffentlichungstag der Anmeldung: **27.02.2013**
(21) Anmeldenummer: 12176483.1
(22) Anmeldetag: 16.07.2012
(51) Int. Cl.: B29C 65/00, B29C 65/48, B29K 21/00

(54) **Elastomerware, die aus mehreren Elastomerbahnen zusammengesetzt ist**

(30) Priorität: 25.08.2011 DE 102011052985
(71) Anmelder: ContiTech Elastomer-Beschichtungen GmbH, 30165 Hannover (DE)
(72) Erfinder: Zahel, Helge, 37154 Northeim (DE); Blomeyer, Karl-Heinz, 37194 Bodenfelde (DE); Storre, Jens, 37176 Nörten-Hardenberg (DE); Köhler, Carsten, 37154 Northeim (DE); Engelhardt,, Oliver, 37191 Katlenburg-Lindau (DE)
(74) Vertreter: Finger, Karsten

(57) **Zusammenfassung**

Elastomerware (2), die aus mehreren miteinander verbundenen Elastomerbahnen (4, 6) zusammengesetzt ist, wobei die Elastomerbahnen (4, 6) an ihren sich berührenden Kanten (8a, 8b) auf Stoß aneinander liegen und über eine ineinandergreifende Verzahnung (10) formschlüssig miteinander verbunden sind, wobei die Stirnflächen (12a, 12b) der Kanten (8a, 8b) zusätzlich stoffschlüssig miteinander verbunden sind.

## Beschreibung

Die Erfindung betrifft eine Elastomerware, die aus mehreren miteinander verbundenen Elastomerbahnen zusammengesetzt ist.

Eine derartige Elastomerware ist aus dem Stand der Technik bekannt und wird in unterschiedlichen Produkten eingesetzt. So werden beispielsweise Tanks oder Gasbehälter aus solchen Elastomerwaren gefertigt. Darüber hinaus wird eine derartige Elastomerware auch in Presswerkzeugen eingesetzt, wobei die Elastomerware an einer Pressbacke befestigt ist. Während eines Pressvorganges wird die Elastomerware mit Druckluft beaufschlagt, so dass der zu pressende Gegenstand gleichmäßig mit Druck beaufschlagt wird. Die Elastomerware kann sich hierbei Vorsprüngen in dem zu pressenden Gegenstand elastisch anpassen, so dass weder in der Elastomerware noch auf dem zu pressenden Gegenstand Druckspitzen entstehen.

Die Elastomerware, die zu den oben genannten Zwecken eingesetzt wird, weist häufig ein so großes Format auf, dass sie aus mehreren Elastomerbahnen zusammengesetzt werden müssen. Hierbei ist es bekannt, die einzelnen Elastomerbahnen auf Stoß miteinander zu verkleben. Dies hat den Vorteil, dass in der Elastomerware keine störenden durch Überlappung entstehenden Kanten vorhanden sind. Es ist jedoch festzustellen, dass eine Elastomerware, die aus mehreren auf Stoß miteinander verklebten Elastomerbahnen zusammengesetzt ist, nur geringen mechanischen Belastungen ausgesetzt werden kann. Es ist aus dem Stand der Technik auch bekannt, die einzelnen Elastomerbahnen der Elastomerware überlappend miteinander zu verkleben. Hierbei entsteht eine große Klebefläche, so dass die Elastomerware großen mechanischen Belastungen ausgesetzt werden kann. Es ist jedoch festzustellen, dass durch die Überlappung der einzelnen Elastomerbahnen störende Kanten in der Elastomerware entstehen. Diese Kanten können z.B. auf Gegenständen, die in einem Presswerkzeug mit einer entsprechenden Elastomerware gepresst werden, unerwünschte Spuren hinterlassen.

Der Erfindung liegt die Aufgabe zugrunde, eine Elastomerware zu schaffen, bei der die einzelnen Elastomerbahnen nicht überlappend miteinander verbunden sind und die trotzdem hohen mechanischen Belastungen standhält.

Die Aufgabe wird gemäß den kennzeichnenden Merkmalen des Anspruchs 1 dadurch gelöst, dass die Elastomerbahnen an ihren sich berührenden Kanten auf Stoß aneinander liegen und über eine ineinander greifende Verzahnung formschlüssig miteinander verbunden sind, wobei die Stirnflächen der Kanten zusätzlich stoffschlüssig miteinander verbunden sind.

Vorzugsweise ist die ineinander greifende Verzahnung so ausgebildet, dass sich die Kanten der auf Stoß aneinander liegenden Elastomerbahnen im Bereich der Verzahnung über die gesamte Länge der Elastomerbahnen berühren (die ineinander greifende Verzahnung also keine Lücke aufweist).

Der mit der Erfindung erzielte Vorteil ist darin zu sehen, dass die Elatomerware keine Überlappungen der einzelnen Elastomerbahnen aufweist. Ein weiterer Vorteil der Erfindungen ist darin zu sehen, dass die Elastomerware dennoch mechanisch belastbar ist, da durch die ineinander greifenden Verzahnungen die einzelnen Elastomerbahnen formschlüssig miteinander verbunden sind und die Verzahnungen hohe Kräfte aufnehmen können. Hierbei werden die einzelnen Zähne der ineinander greifenden Verzahnungen durch die stoffschlüssige Verbindung der Kanten der einzelnen Elastomerbahnen in einer Ebene gehalten, so dass es nicht zu einer Lösung der Verzahnung kommen kann. Ein weiterer Vorteil der Erfindung ist darin zu sehen, dass sich durch die Ausbildung der ineinander greifenden Verzahnung die Kantenlänge der Elastomerbahnen verlängert. Hierdurch vergrößern sich die Stirnflächen, die für die stoffschlüssige Verbindung der einzelnen Elastomerbahnen zur Verfügung steht, so dass auch diese mechanisch belastbar ist.

Gemäß einer Weiterbildung der Erfindung nach Anspruch 2 ist die stoffschlüssige Verbindung durch eine Verklebung mit einem Kleber hergestellt. Hierbei wird ein Kleber verwendet, der für die Verklebung von Elastomerbahnen geeignet ist. Der Vorteil dieser Weiterbildung ist darin zu sehen, dass eine Verklebung der einzelnen Elastomerbahnen ohne Werkzeuge, wie z.B. Pressen, vorgenommen werden kann. Ein weiterer Vorteil ist darin zu sehen, dass geeignete Kleber in großer Auswahl zur Verfügung stehen.

Gemäß einer Weiterbildung nach Anspruch 3 ist die stoffschlüssige Verbindung durch Kaltvulkanisation hergestellt. Der Vorteil dieser Weiterbildung ist darin zu sehen, dass eine Kaltvulkanisation der einzelnen Elastomerbahnen ohne zusätzliche Werkzeuge, z.B. Pressen, vorgenommen werden kann. Ein weiterer Vorteil der Weiterbildung ist darin zu sehen, dass eine durch Kaltvulkanisation hergestellte Verbindung der Elastomerbahnen höheren mechanischen Belastungen ausgesetzt werden kann als eine durch Kleber hergestellte Verbindung der Elastomerbahnen.

Gemäß einer Weiterbildung der Erfindung nach Anspruch 4 ist die stoffschlüssige Verbindung durch Heißvulkanisation hergestellt. Der Vorteil dieser Weiterbildung ist darin zu sehen, dass durch eine Heißvulkanisation eine stoffschlüssige Verbindung zwischen den einzelnen Elastomerbahnen hergestellt werden kann, die sehr hohen mechanischen Belastungen standhält.

Gemäß einer Weiterbildung der Erfindung nach Anspruch 5 sind die Elastomerbahnen mindestens 1 mm dick. Ein Vorteil dieser Weiterbildung ist darin zu sehen, dass die einzelnen Zähne der Elastomerbahnen bei der Herstellung der Elastomerware nicht zum "Aufrollen" neigen und somit eine gute stoffschlüssige Verbindung der einzelnen Elastomerbahnen auf einfache Art und Weise möglich ist. Ein weiterer Vorteil der Weiterbildung ist darin zu sehen, dass bei Elastomerbahnen, die mindestens 1 mm dick sind, große Stirnflächen für die stoffschlüssige Verbindung der einzelnen Elastomerbahnen zur Verfügung stehen.

Gemäß einer Weiterbildung der Erfindung nach Anspruch 6, stimmt die Form der einzelnen Zähne der Verzahnung einer Elastomerbahn mit der Form der Zahnzwischenräume überein, wobei die Form der Zahnzwischenräume gegenüber der Form der Zähne in der Ebene der Elastomerbahn um 180° verdreht ist. Der Vorteil dieser Weiterbildung ist darin zu sehen, dass einzelne in gewünschter Länge konfektionierte Abschnitte einer einzigen langen Elastomerbahn zur Herstellung der Elastomerware aneinander gelegt und gemäß der Erfindung miteinander verbunden werden können. Ein Vorsehen von unterschiedlichen Elastomerbahnen mit unterschiedlich ausgeformten Verzahnungen, die ineinander greifen, ist also nicht notwendig. Ein weiterer Vorteil dieser Weiterbildung ist darin zu sehen, dass die ineinander greifende Verzahnung keine Lücken aufweist und somit besonders große Stirnflächen für die stoffschlüssige Verbindung zur Verfügung stehen.

Ein Ausführungsbeispiel und weitere Vorteile der Erfindung werden im Zusammenhang mit den nachstehenden Figuren erläutert, darin zeigt:
Fig. 1 eine Elastomerware in Draufsicht,
Fig. 2 einen Querschnitt durch Fig. 1.

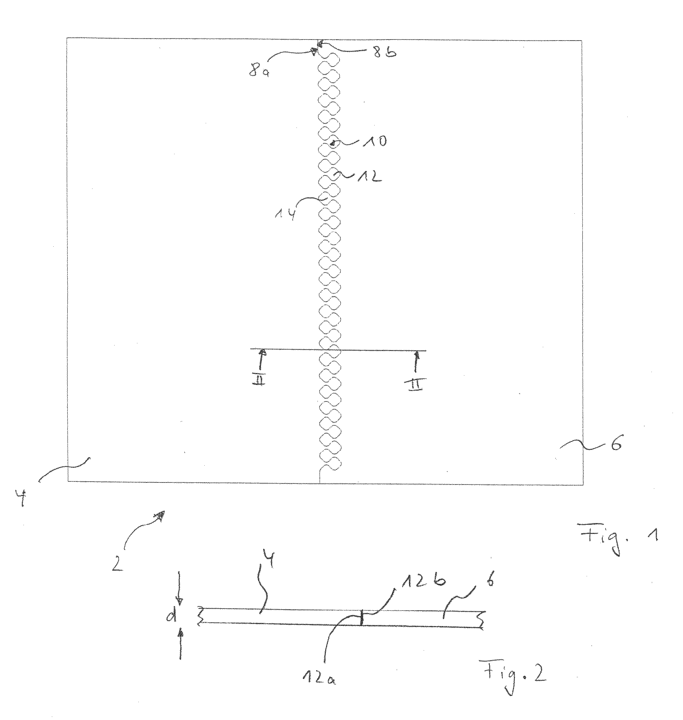

Fig. 1 zeigt eine Elastomerware 2, die aus den Elastomerbahnen 4 und 6 zusammengesetzt ist. Die Elastomerbahnen 4, 6 liegen an ihren sich berührenden Kanten 8a, 8b auf Stoß aneinander und sind über eine ineinander greifende Verzahnung 10 formschlüssig miteinander verbunden. Zur Herstellung der ineinander greifenden Verzahnung 10 weisen sowohl die Zähne 12 der Elastomerbahn 4 als auch die Zähne 14 der Elastomerbahn 6 Hinterschneidungen auf. Im gezeigten Ausführungsbeispiel ist die ineinander greifende Verzahnung 10 "puzzelartig". Darüber hinaus stimmt die Form der Zähne 12 und 14 überein. Ferner stimmt die Form der einzelnen Zähne 12 der Elastomerbahn 4 mit der Form der Zahnzwischenräume zwischen den Zähnen 12 in der Elatomerbahn 4 überein, wobei die Zahnzwischenräume gegenüber den Zähnen 12 in der Ebene der Elastomerbahn (also in der Papierebene) um 180° verdreht ist. Dies beides führt dazu, dass die Zahnzwischenräume zwischen den Zähnen 12 durch die Zähne 14 der Elastomerbahn 6 vollständig ausgefüllt sind. Die Elastomerbahn 4 und die Elastomerbahn 6 können also von einer einzigen langen Elastomerbahn in entsprechender Länge abgeschnitten und zu der gezeigten Elastomerware 2 miteinander verbunden werden. Die Verzahnung der Elastomerbahnen 4, 6 wird vorzugsweise mit einem computergesteuerten Schneidmesser erzeugt.

Zusätzlich zu der formschlüssigen Verbindung der Elastomerbahnen 4, 6, die mit Hilfe der ineinander vergreifenden Verzahnung 10 erstellt wird, sind die Stirnflächen der Kanten 8a, 8b stoffschlüssig miteinander verbunden. Dies wird im Einzelnen anhand der Figur 2 erläutert, die einen Querschnitt durch die Figur 1 entlang der Linie II/II zeigt.

Die Dicke d der Elastomerbahnen 4, 6 beträgt mindestens 1 mm. Die Stirnflächen 12a, 12b der Elastomerbahnen 4, 6 sind stoffschlüssig miteinander verbunden, wobei die stoffschlüssige Verbindung mit Hilfe eines Klebers, durch Kaltvulkanisation oder durch Heißvulkanisation hergestellt werden kann. Dazu werden die Stirnflächen 12a, 12b vor dem Zusammenfügen der Elastomerbahnen 4, 6 mit einem geeigneten Kleber bzw. mit einem geeigneten Vulkanisator eingestrichen.

### Bezugszeichenliste

### (Teil der Beschreibung)

- 2: Elastomerware
- 4: Elastomerbahn
- 6: Elastomerbahn
- 8a, 8b: Kante
- 10: Verzahnung
- 12a, 12b: Stirnfläche

## Patentansprüche

1. Elastomerware, die aus mehreren miteinander verbundenen Elastomerbahnen zusammengesetzt ist, **dadurch gekennzeichnet, dass** die Elastomerbahnen an ihren sich berührenden Kanten auf Stoß aneinander liegen und über eine ineinandergreifende Verzahnung formschlüssig miteinander verbunden sind, wobei die Stirnflächen der Kanten zusätzlich stoffschlüssig miteinander verbunden sind.

2. Elastomerware nach Anspruch 1, **dadurch gekennzeichnet, dass** die stoffschlüssige Verbindung durch eine Verklebung mit einem Kleber hergestellt ist.

3. Elastomerware nach Anspruch 1, **dadurch gekennzeichnet, dass** die stoffschlüssige Verbindung durch Kaltvulkanisation hergestellt ist.

4. Elastomerware nach Anspruch 1, **dadurch gekennzeichnet, dass** die stoffschlüssige Verbindung durch Heißvulkanisation hergestellt ist.

5. Elastomerware nach einem der Ansprüche 1 bis 4, **dadurch gekennzeichnet, dass** die Elastomerbahnen mindestens 1 mm dick sind.

6. Elastomerware nach einem der Ansprüche 1 bis 5, **dadurch gekennzeichnet, dass** die Form der einzelnen Zähne der Verzahnung einer Elastomerbahn mit der Form der Zahnzwischenräume übereinstimmt, wobei die Form der Zahnzwischenräume gegenüber der Form der Zähne in der Ebene der Elatomerbahn um 180° verdreht ist.
